# EUROPEAN PATENT APPLICATION

(11) **EP 0 779 697 A1**
(43) Date of publication of application: **18.06.1997**
(21) Application number: 96119686.2
(22) Date of filing: 09.12.1996
(51) Int. Cl.: H02K 1/32, H02K 9/06

(54) **An alternator, particularly for motor vehicles**

(30) Priority: 13.12.1995 IT TO951003
(71) Applicant: MAGNETI MARELLI MANUFACTURING SPA, 20145 Milano (IT)
(72) Inventor: Baldoni, Fernando, 66054 Vasto (Chieti) (IT)
(74) Representative: Quinterno, Giuseppe

(57) **Abstract**

The alternator (20) comprises a rotor (25) with pole extensions (40, 41) having intercalated teeth projecting in opposite directions from a pair of facing pole plates (38, 39), and impellers (53, 54) fixed to the rotor (25). Between circumferentially consecutive pole extensions (40, 41) are defined channels (46, 47) converging in pairs towards the pole plates (38, 39). The rotor (25) is provided with deflector devices (55, 56) for intercepting streams generated by the impellers (53, 54) in convergence regions (49, 50) between the said channels (46, 47) in such a way as to form quasi-axial streams in the channels (46, 47) between the pole extensions (40, 41) and streams directed radially outwardly close to the pole plates (38, 39) of the rotor.

## Description

The present invention relates to an alternator, particularly for motor vehicles, of the type including a rotor having pole extensions with intercalated teeth (claw-pole rotor).

More specifically, the subject of the invention is an alternator of the type comprising a rotor having pole extensions with intercalated teeth projecting in opposite directions from a pair of facing pole plates, and provided with ventilation means fixed to the rotor to generate, in operation, streams of ventilation air, and in which between circumferentially consecutive pole extensions of the rotor are defined channels converging in pairs towards and adjacent the said pole plates.

The object of the invention is to provide an alternator of the above-specified type in which a very effective cooling of its windings and its other internal components is ensured.

This object is achieved according to the invention with an alternator the principal characteristics of which are defined in the appended Claim 1.

Further characteristics and advantages of the invention will become apparent from the following detailed description given with reference to the attached drawings, provided purely by way of non-limitative example, in which:
Figure 1 is a schematic axial sectional view which shows an alternator according to the invention;
Figure 2 is a perspective view of the rotor of the alternator of Figure 1;

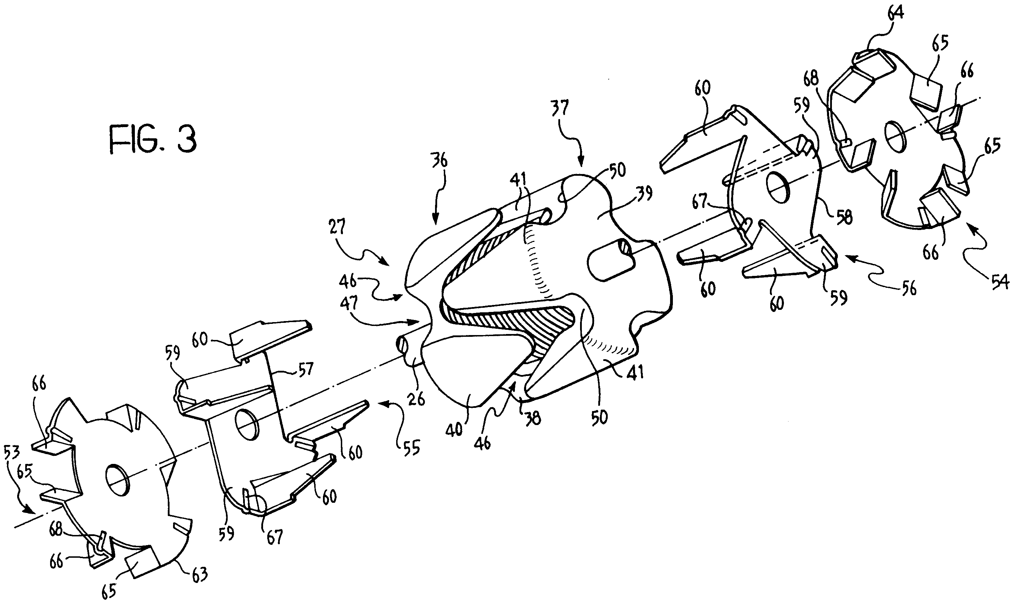

Figure 3 is an exploded perspective view of the rotor shown in Figure 2;
Figure 4 is a developed representation of the rotor of Figure 2; and
Figure 5 is a partial section on an enlarged scale of the rotor of Figure 2.

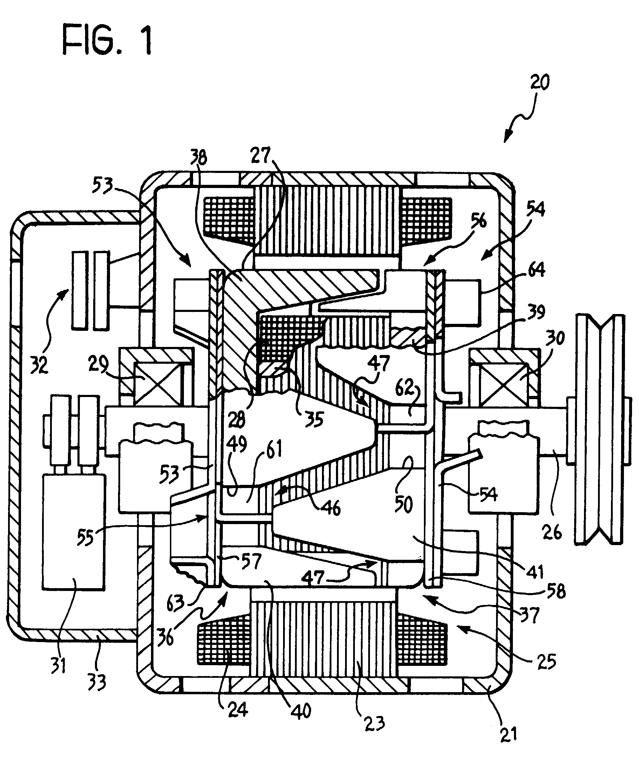

In Figure 1 an alternator 20 is schematically illustrated in axial section, intended in particular for use as a generator on board a motor vehicle. The alternator 20 is of the "claw-pole" type or rather of the type with a Lundell rotor.

It comprises a casing 21 in which is fixed a stator 22 with a stack of laminations 23 and a stator winding 24, a rotor 25 carried by a shaft 26, a rotor armature 27 and a rotor winding 28.

The shaft 26 of the rotor 25 is supported by two bearings 29 and 30 mounted in the casing 21.

The alternator further includes a brush-carrier unit 31 cooperating with a commutator carried by the shaft 26, and a rectifier/regulator unit 32 housed within an end cover 33.

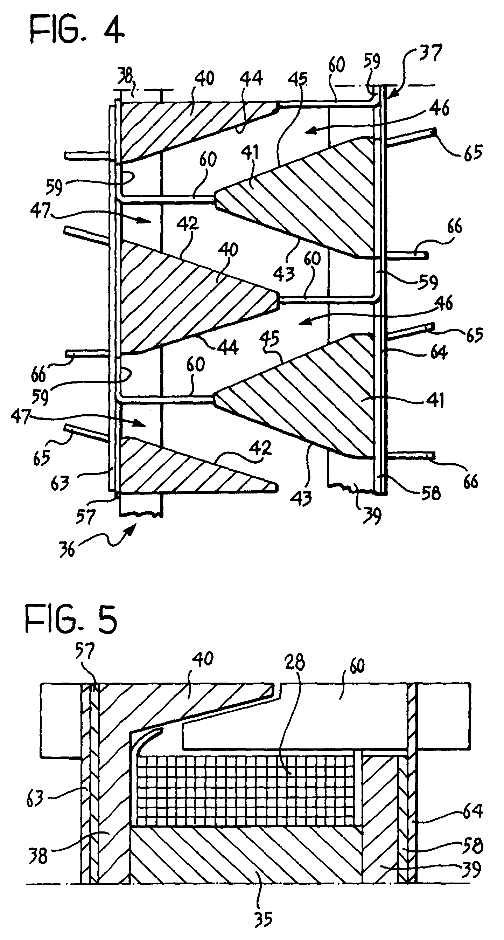

The rotor armature 27 comprises a cylindrical magnetic core 35 (Figures 4 and 5) and two pole pieces 36 and 37. These latter comprise respective pole plates 38 and 39 provided with pole extensions 40 and 41 in the form of projecting teeth tapering towards their free ends.

The rotor winding 28 is disposed around the core 35 within the pole extensions 40 and 41 and is delimited axially by the inner faces of the pole plates 38 and 39.

In the exemplary embodiment illustrated each pole element 36 and 37 has four pole extensions 40 and 41.

The number of pole extensions could however be different depending on the applications.

As illustrated in Figures from 2 to 5, the pole extensions 40, 41 of the opposite pole pieces 36 and 37 are intercalated with one another (that is they alternate) and have respective converging sides 42, 44 and 43, 45.

The opposite, circumferentially consecutive pole extensions of the two pole pieces 36 and 37 define between their sides two arrays of channels indicated 46 and 47 respectively.

In the linearised development shown in Figure 4 the channels 46 appear essentially parallel to one another and inclined by a certain angle with respect to the axis of the rotor. In this linearised representation the channels 47 are also parallel to one another and inclined with respect to the axis of the rotor in a symmetrical manner with respect to the channels 46.

The channels 46 and 47 converge in pairs adjacent opposite pole plates 38 and 39.

These pole plates 38, 39 have respective peripheral radial notches 49, 50 between the corresponding pole extensions 40 and 41.

The pole plates 38 and 39 are positioned facing one another with their respective pole extensions interpenetrating such that the pole extensions 40 of the pole plate 38 face the notches 50 of the pole plate 39, whilst the pole extensions 41 of the pole plate 39 face the notches 49 of the pole plate 38.

The notches 49 and 50 of the pole plates are formed in correspondence with the convergence regions of the channels 46 and 47.

These channels 46 and 47 are open at the ends and radially outwardly, whilst towards the inside they are facing the rotor winding 28.

According to the invention, the alternator 20 includes two impellers 53, 54 fixed to the rotor 25 within the casing 21 to generate a ventilation air stream in operation.

Between the impellers 53, 54 and the pole plates 38, 39 the rotor 25 has two deflector structures 55, 56 fixed thereto, intended to partially intercept the ventilation air streams in the convergence regions of the channels 46 and 47 as will be better explained hereinafter.

The impellers 53, 54 are associated with the pole plates 38 and 39 of the rotor and are arranged to generate axial air streams which are directed along the channels or gulleys 46 and 47 defined between the pole extensions 40 and 41, as well as radial streams directed outwardly in the vicinity of the pole plates 38 and 39.

The deflector structures 55 and 56 are constituted for example by cut and folded metal plates which have respective angularly spaced peripheral deflector members 57, 58. Each of these deflector members is able to intercept the ventilation air stream in a portion of a corresponding notch 49, 50 of the pole plate 38 and 39 respectively of the rotor.

To this end (Figure 4) the deflector members 57 and 58 each have a transverse interception portion 59 which is essentially orthogonal to the axis of the rotor and which obstructs a portion of a corresponding notch 49 or 50, and a shaped end fin 60 which is bent through about 90° with respect to the portion 59 and which is disposed essentially in an axial plane, preferably in the plane of symmetry of a notch 49 or 50.

The portions 59 and 60 of the deflector members 57 and 58 extend in such a way as to intercept the ends of the channels 46 adjacent the pole piece 36 and the ends of the channels 47 adjacent the pole piece 37 (see, in particular, Figures 1 and 4).

The shaped fins 60 have an initial or root part having substantially parallel longitudinal edges, and an end portion with an inclined edge.

The initial portion of each fin 60 extends from the outer surface of the pole plate 38 or 39 up to the free end of the facing pole extension 41 or 40.

As is seen in Figure 5, the end portion of each fin 60 fits into the space between the inner face of the facing pole extension 40 or 41 and the rotor winding 28.

The fins 60 thus constitute separating partitions between the channels 46 and the channels 47.

In the embodiment illustrated the deflector members 57 and 58 are formed from a pair of approximately square non-magnetic metal plates provided with respective central apertures for the passage of the shaft 26. The interception portions 59 of the deflector members 57 and 58 are formed close to the corners of the said plates.

The outer edges of the interception portions 59 and of the fins 60 are substantially tangential to the outer surfaces of the pole extensions 40 and 41.

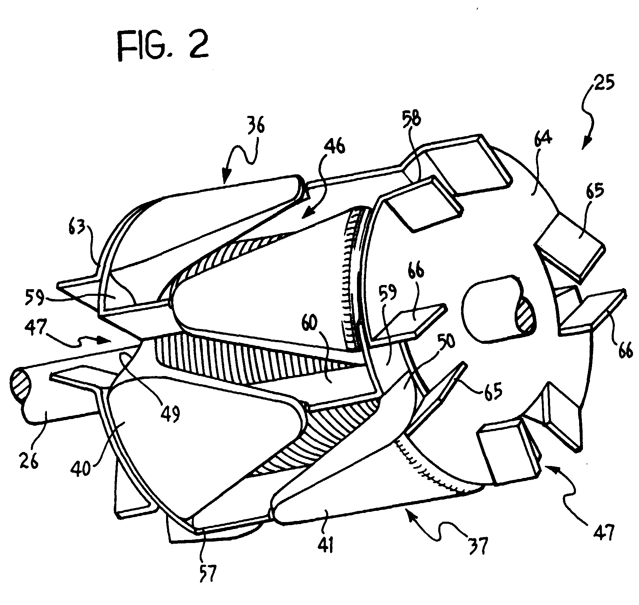

In use, the deflector member 57 intercepts the quasi-axial streams in the channels 47 and have their fins 60 extend towards the right in Figure 2; the deflector member 58 on the other hand intercepts the streams in the channels 47 and the respective fins 60 extend towards the left in this said figure.

The deflector members 57 and 58, with their associated portions 59 and their fins 60 therefore have a specular conformation and are mounted angularly off set from one another as can be seen in the drawings.

The plates 38 and 39 of the rotor project axially from the stack of laminations of the stator and face the head ends of the stator winding 24 (Figure 1).

Conveniently, in the zones between the portions 59 and the fins 60 adjacent the notches 49 and 50 the deflector members 57 and 58 define radial outlet openings 61, 62 (Figure 1) the central portion of the channels 46 and 47 being delimited outwardly by the stack of laminations 23. These outlet openings are directed radially towards the head ends of the stator winding 24.

According to the invention the impellers 53 and 54 produce, in operation, opposite and contrary quasi-axial streams of ventilation air as well as radial air streams. The deflector members 57 and 58 ensure that the directions of the ventilation streams are opposite along the two sides of each pole extension 40 and 41.

The quasi-axial ventilation streams can enter the channels 47 and the channels 46 alongside the deflector members 57 and 58, and can emerge radially towards the head ends of the winding 24 at the opposite ends of the said channels through the outlet openings 62 and 61.

Each channel 46 and 47 therefore has an axial opening and a radial outlet and the deflector members 57 and 58 act to deflect radially outwardly the quasi-axial ventilation streams which flow in the channels 46 and 47.

The impellers 53 and 54 comprise two shaped plates 63 and 64 fixed to the rotor adjacent to the pole plates 38 and 39.

Each plate 63, 64 forms a set of inclined blades 65 to create axial ventilation streams and a set of radial blades 66 alternating with the inclined blades to generate radial ventilation streams.

In particular, the blades 65 are disposed adjacent the partially intercepted notches 49 and 50 to direct the axial ventilation streams into the channels 46 and 47.

The plates 63 and 64 have a flat central part pierced to receive the shaft 26.

The blades 65 and 66 are formed by bending corresponding shaped fins from the plates 63 and 64.

The impellers 53 and 54 are also mirror images of one another and are mounted angularly off set as seen in the drawings.

The impellers 53 and 54 and the deflector structures 55 and 56 have indentations 68 and ribs 67 respectively, which can be coupled together in such a way as to ensure their mutual relative angular positioning.

The blades 65 of the impellers extend essentially along a prolungation of the sides 44 of the pole extensions 40 and the sides 43 of the pole extensions 41 respectively (Figure 4).

The radial blades 66 in turn have an angular position substantially coincident with the roots of the edge of the sides 42 of the pole extensions 40 and the edge of the sides 45 of the pole extensions 41.

Each radial blade 66 is thus positioned in correspondence with a closed channel 46 or 47, whilst each inclined blade 65 is positioned in correspondence with the mouth of an open channel.

This arrangement is repeated circumferentially around the two ends of the rotor.

During rotation, the rotor winding 28 is then washed by quasi-axial ventilation streams alternately directed by the pole piece 36 towards the pole piece 37 through the channels 47, and by the pole piece 37 to the element 36 through the channels 46. These opposite streams are separated from one another by the fins or partitions 60.

Eight streams of ventilation air thus flow over the head ends of the stator winding in turn, four of which streams are generated directly by the radial blades 66 of the impellers while the other four come from deflection of quasi-axial streams by the deflectors 57 and 58 through the outlet openings 61 and 62.

The ventilation streams emerging radially from the outlets 61 and 62 are coherent with the radially directed streams generated by the blades 66 and mixed with these without turbulence.

Naturally, the principle of the invention remaining the same, the embodiments and details of construction can be widely varied with respect to what has been described and illustrated purely by way of non-limitative example, without by this departing from the ambit of the invention.

Thus, for example, as opposed to what has been previously described, the impellers and the associated deflector structures could be made of plastics materials. Alternatively, the subdivisions between the channels 46 and 47 could be made by injection moulding of plastics material directly onto the rotor.

## Claims

1. An alternator (20), particularly for motor vehicles, comprising a rotor (25) with polar extensions (40, 41) have intercalated teeth projecting in opposite directions from a pair of facing pole plates (38, 39) and including ventilation means (53, 54) fixed to the rotor (25) to generate, in operation, ventilation air streams between circumferentially consecutive pole extensions (40, 41) defining channels (46, 47) converging in pairs towards the pole plates (38, 39);
characterised in that the rotor (25) is provided with
deflector means (55, 56) for intercepting streams generated by the said ventilation means (53, 54) in convergence regions (49, 50) between the said channels (46, 47) in such a way as to form quasi-axial streams in the channels (46, 47) between the pole extensions (40, 41) and radial streams directed outwardly in the vicinity of the said pole plates (38, 39).

2. An alternator according to Claim 1, in which each pole plate (38, 39) of the rotor (25) has peripheral notches (49, 50) alternating with the pole extensions (40, 41) in the convergence regions between the said channels (46, 47);
characterised in that the said deflector means (55, 56) comprise shaped deflector members (57, 58) each acting to intercept a ventilation stream in a portion of a corresponding notch (49, 50).

3. An alternator according to Claim 2, characterised in that the said deflector members (57, 58) are formed by a pair of plates or sheets having a respective flat portion disposed adjacent a corresponding pole plate (38, 39) and respective bent portions for partitioning the said channels (46, 47).

4. An alternator according to any preceding claim, in which the rotor (25) comprises a winding (28) within the pole extensions (40, 41); characterised in that the deflector means (56, 57) comprise, for each pole extension (40, 41), a partition (60) disposed in an axial plane, between the pole extension (40, 41) and the said winding (28).

5. An alternator according to Claim 2 or Claim 3 and Claim 4, characterised in that the partitions (60) associated with a pole plate (38, 39) are formed as fins (60) of one of the said deflector members (57, 58).

6. An alternator according to any preceding claim, comprising a stator (22) with a stator armature (23) within which the rotor (25) is housed and a stator winding (24) the head ends of which project axially from the said stator armature (23); characterised in that the deflector means (55, 56) are arranged to deflect, in operation, axial streams from the ends of the said channels (46, 47) into a radial direction towards the head ends of the stator winding (24).

7. An alternator according to Claims 4 or 5 and Claim 6, characterised in that the said deflector members (57, 58) have, in correspondence with each notch (49, 50), an interception portion (59) facing the corresponding pole plates (38, 39) and a portion (60) bent to form a fin, which define a radial outlet opening (61, 62) facing the said head ends of the winding.

8. An alternator according to any preceding claim, characterised in that the said ventilation means (53, 54) act to generate quasi-axial ventilation streams in opposite directions along the two sides of each polar extension (40, 41).

9. An alternator according to any preceding claim, characterised in that the said ventilation means (53, 54) comprise a first set of blades (65) for generating the said axial streams, and a second set of radial blades (66) alternating with those of the first set (65) to generate the said radial streams.

10. An alternator particularly for motor vehicles, comprising a support structure (21), a stator (22) with an armature (23) and a stator winding (24), and a rotor (25) including a rotor winding (28) and two pole plates (38, 39) from which extend respective pole extensions (40, 41) projecting towards the other pole plate (39, 38) and in which circumferentially consecutive pole extensions (40, 41) are directed in opposite senses and are intercalated with one another to define channels (46, 47) converging in pairs towards the pole plates (38, 39);
the alternator being characterised by the fact that it comprises
two impellers (53, 54) fixed to the rotor (25) adjacent the pole plates (38, 39) and operable to generate two axial ventilation streams having opposite directions along the two sides (42, 44; 43, 45) of each pole extension (40, 41) and along the rotor winding (28); and two series of shaped deflector members (57, 58) fitted between the pole extensions (40, 41) and the rotor winding (28) close to the pole plates (38, 39) to divide the ventilation streams in the convergence regions (49, 50) of the channels (46, 47) into input components in quasi-axial directions and components deflected in radial direction directed towards the head ends of the stator winding (24).

11. An alternator according to Claim 10, characterised in that the said deflector members (57, 58) are formed by a pair of plates or sheets having an essentially flat main portion and peripheral bent fins (60); the said plates or sheets being interposed between the pole plates (38, 39) and the said impellers (53, 54).

12. An alternator according to Claim 11, characterised in that the said impellers (53, 54) and the said plates or sheets (55, 56) have respective complementary formations (67, 68) operable to allow predetermined mutual angular positioning.

13. An alternator according to any of Claims 10 to 12, in which each pole plate (38, 39) of the rotor (25) has peripheral notches (49, 50) between the said pole extensions (40, 41); characterised in that each deflector member (57, 58) is arranged to intercept the ventilation stream in a portion of a corresponding notch (49, 50) and to define a radial outlet opening (61, 62) facing the head end of the stator winding (24).

14. An alternator according to any of Claims 10 to 13, characterised in that the deflectors (57, 58) comprise, for each pole extension (40, 41), a respective partition (60) disposed in an axial plane between a pole extension (40, 41) and the rotor winding (28).
